# EUROPEAN PATENT SPECIFICATION

(11) **EP 4 275 324 B1**
(45) Date of publication and mention of the grant of the patent: **22.10.2025**
(21) Application number: 21916881.2
(22) Date of filing: 11.01.2021
(51) Int. Cl.: H04L 9/32, H04L 9/40, H04L 67/562, H04L 67/63, H04W 12/084, H04W 12/043

(54) **ACCESS TOKEN HANDLING FOR INDIRECT COMMUNICATION**
HANDHABUNG VON ZUGANGSTOKEN FÜR INDIREKTE KOMMUNIKATION
GESTION DE JETONS D'ACCÈS POUR UNE COMMUNICATION INDIRECTE

(43) Date of publication of application: 15.11.2023
(73) Proprietor: Nokia Technologies Oy, 02610 Espoo (FI)
(72) Inventor: WANG, Xin, Qingdao, Shandong 266033 (CN); LANDAIS, Bruno, 22560 Pleumeur-Bodou (FR); WANG, Xinxin, Qingdao, Shandong 266100 (CN); DU, Hanxiao, Qingdao, Shandong 266699 (CN)
(74) Representative: Nokia EPO representatives
(86) International application number: PCT/CN2021/071063
(87) International publication number: WO 2022/147827

(56) References cited:
- WO-A1-2020/221956
- CN-A- 111 435 932
- US-A1- 2016 094 530
- US-A1- 2018 007 024
- US-A1- 2019 251 241
- "3rd Generation Partnership Project; Technical Specification Group Core Network and Terminals; 5G System; Network Function Repository Services; Stage 3 (Release 16)", vol. CT WG4, no. V16.4.0, 7 July 2020 (2020-07-07), pages 1 - 192, XP051924191, Retrieved from the Internet <URL:ftp://ftp.3gpp.org/Specs/archive/29_series/29.510/29510-g40.zip 29510-g40.docx> [retrieved on 20200707]

## Description

### TECHNICAL FIELD

Embodiments of the present disclosure generally relate to the field of telecommunication, and in particular, to methods, apparatuses and computer readable storage media for indirect communication.

### BACKGROUND

The 3^{rd} Generation Partnership Project (3GPP) Release 16 (Rel-16) introduces an indirect communication model in which two network functions (NFs) of the 5G Core Network can communicate with each other via one or more service communication proxy (SCP). The SCP is an intermediate function covering delegated NF discovery to help resolving the target NF producer instances and delegated routing to help route Control Plane messages between two NFs. The 3GPP Rel-16 also introduces new architectural options for indirect communication, which are called Model C (also referred as Indirect Communication without Delegated Discovery) and Model D (also referred as Indirect Communication with Delegated Discovery). In Model C, a NF service consumer (NFc) discovers and selects a NF service producer (NFp) and the SCP is only used for routing service requests to the selected NFp. In Model D, the functionalities for discovering and selecting the NFp are delegated to the SCP.

With the introduction of indirect communication with delegated discovery, the SCP is responsible for requesting an access token from an authorization server on behalf of the NFc. However, the SCP cannot figure out which scope(s) a service request it receives corresponds to. Thus, the SCP cannot request access tokens for service requests corresponding to specific service operation/resources that require specific authorization. Moreover, the NFp is still required to verify the access token for every service request received from the SCP, which will cause significant overhead on the NFp.
WO2020221956A1 discloses that a service request is received at a first service communication proxy element, wherein the service request is received from a service consumer and is a request to access at least one service of a service producer. The first service communication proxy element determines at least one target service producer based on the service request. The first service communication proxy element sends an access token request to an authorization entity, wherein the access token request is generated based on the determining step. The first service communication proxy element receives an access token response from the authorization entity, wherein the access token response comprises an access token. The first service communication proxy element may then send a service request with the access token to a second service communication proxy element, wherein the second service communication proxy element is associated with the target service producer. The method may apply to roaming and non-roaming scenarios.
US2019251241A1 provides Security management techniques for service authorization for communication systems. A first element or function in a home network of a communication system registers a second element or function in the home network as a service consumer of one or more services provided by at least a third element or function in the home network, receives a request from the second element or function, and provides an access token to the second element or function responsive to authenticating the second element or function, the access token being used by the second element or function to access the one or more services provided by the third element or function.

### SUMMARY

The invention is set out in the appended set of claims.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Through the more detailed description of some example embodiments of the present disclosure in the accompanying drawings, the above and other objects, features and advantages of the present disclosure will become more apparent, wherein:
Figs. 1A and 1B illustrate block diagrams of example environments in which embodiments of the present disclosure can be implemented;
Fig. 2 illustrates an interaction diagram of an example process for indirect communication according to some example embodiments of the present disclosure;
Fig. 3 illustrates an interaction diagram of an example process for indirect communication according to some example embodiments of the present disclosure;
Fig. 4 shows a flowchart of an example method according to some example embodiments of the present disclosure;
Fig. 5 shows a flowchart of an example method according to some example embodiments of the present disclosure;
Fig. 6 shows a flowchart of an example method according to some example embodiments of the present disclosure;
Fig. 7 shows a flowchart of an example method according to some example embodiments of the present disclosure;
Fig. 8 illustrates a simplified block diagram of an apparatus that is suitable for implementing embodiments of the present disclosure; and
Fig. 9 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an example embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as Long Term Evolution (LTE), LTE-Advanced (LTE-A), Wideband Code Division Multiple Access (WCDMA), High-Speed Packet Access (HSPA), Narrow Band Internet of Things (NB-IoT), New Radio (NR) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the future fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As described above, the 3GPP Rel-16 of 5G Service Based Architecture (SBA) introduces new architectural options for indirect service communication called Model C and Model D. In Model C, a NFc discovers and selects a NFp and the SCP is only used for routing service requests to the selected NFp. In Model D, the functionalities for discovering and selecting the NFp are delegated to the SCP.

OAuth 2.0 is a key technology and widely used for NF service access authorization in 5G SBA. It allows NF service producers to authorize service requests from NF service consumers. When a NFc requests to access or consume a service provided by a NFp, it needs to request an access token from an OAuth 2.0 authorization server (for example, a NF repository function, NRF). If the NFc is authorized to access the service of the NFp, the OAuth 2.0 authorization server returns an access token. The NFc then includes the access token in its service request towards the NFp. The NFp will verify the access token received from the NFc.

With the introduction of indirect communication with delegated discovery, the SCP is responsible for requesting the access token from the authorization server on behalf of the NFc. The verification of the access token shall still be performed by the NFp. In this event, there are several problems identified.

First, an SCP cannot figure out which scope(s) a service request it receives corresponds to. An SCP can derive the Application Programing Interface (API) name from the request Uniform Resource Identifier (URI) of the service request. Therefore, the SCP could in principle figure out the scope corresponding to the service name of the requested NF service. Regarding services (i.e., APIs) for which certain operations on resources require specific authorization (i.e., an additional scope), the SCP cannot figure out the additional scope information required to access these operations/resources, since this additional scope information is API specific information, requiring in-depth knowledge of API resources and service operations. It would be impossible and unpractical for the SCP to get such knowledge. As such, the SCP cannot request access tokens for service requests corresponding to specific service operation/resources that require specific authorization. In other words, the current Rel-16 specifications cannot support obtaining access tokens for APIs that support additional scopes.

Second, the NFp is still required to verify the access token for every service request received from the SCP, which will cause significant overhead on the NFp. In other words, the indirect communication models enable to offload all the service access authorization procedures from the NFc to the SCP, but do not enable to offload the service access authorization procedures (such as, access token verification) from the NFp to the SCP.

Embodiments of the present disclosure provide a solution for handling access tokens in an indirect communication scenario, so as to solve the above problems and one or more of other potential problems. According to this solution, a NFc includes in its service request a header indicating scope information corresponding to the service request and transmits the service request to an SCP (also referred to as "SCPc") serving the NFc. The SCPc can derive, from the header, the scope(s) corresponding to the service request and request an access token corresponding to the derived scope(s). The SCPc forwards the service request including the header and the access token to an SCP (also referred to as "SCPp") serving a NFp. The SCPp verifies the access token by checking if the scope(s) authorized within the access token match the scope(s) indicated in the header. If the verification of the access token succeeds, the SCPp removes the access token and forwards the service request including the header indicating the scope information to the NFp. The NFp no longer needs to validate the access token but only needs to verify that the service request matches the scope(s) indicated in the header.

In this way, the SCP(s) can remain application/API logic agnostic. The mapping between the service request and the scope(s) indicated in the header is generated by the NFc and verified by the NFp. As such, the requesting and validation of the access token can happen at the SCPc and SCPp respectively, without understanding the application/API logic in the NFc or NFp.

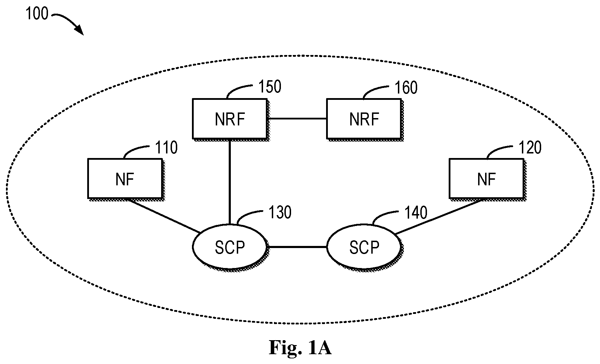

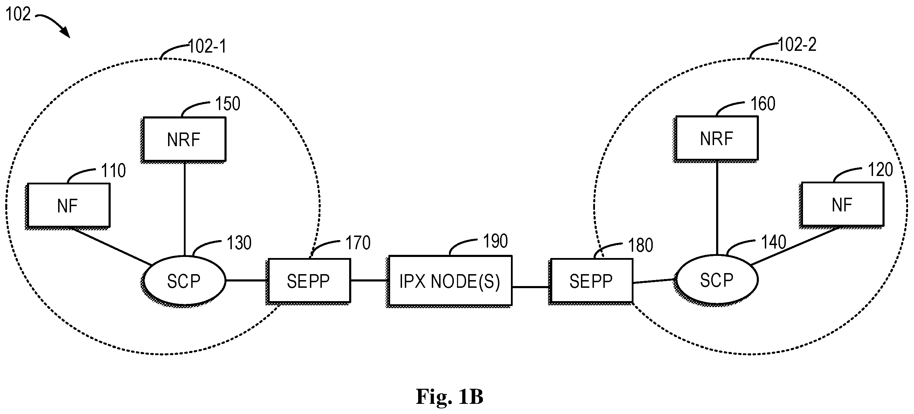

Principle and implementations of the present disclosure will be described in detail below with reference to the accompanying drawings. Reference is now made to Figs. 1A and 1B, which illustrate block diagrams of example environments in which embodiments of the present disclosure can be implemented.

Fig. 1A illustrates an example environment 100 for the SBA scenario. The environment 100 may be a Public Land Mobile Network (PLMN). As shown in Fig. 1A, the environment 100 includes NFs 110 and 120, a SCP 130 serving the NF 110, a SCP 140 serving the NF 120 and NF repository functions (NRFs) 150 and 160. In some example embodiments, the NF 110 may act as a service consumer, which may request a service from the NF 120 acting as a service producer. Only for the purpose of illustration, in the following, the NF 110 is also referred to as "NFc 110" or "first NF 110", and the NF 120 is also referred to as "NFp 120" or "second NF 120". The SCP 130 connected to the NFc 110 is also referred to as "SCPc 130" or "first SCP 130", and the SCP 140 connected to the NFp 120 is also referred to as "SCPp 140" or "second SCP 140".

Fig. 1B illustrates a further example environment 102 for the SBA roaming scenario, which includes two PLMNs 102-1 and 102-2. For example, the networks 102-1 and 102-2 may be operated by different operators. The network 102-1 (also referred to as "first network") may include the NF 110, the SCP 130 and the NRF 150. A SEPP 170 is located on the edge of the network 102-1 and protects the network 102-1 against unwanted traffic from other networks. Similarly, the network 102-2 (also referred to as "second network") may include the NF 120, the SCP 140 and the NRF 160. A SEPP 180 is located on the edge of the network 102-1 and protects the network 102-1 against unwanted traffic from other networks. For example, the NF 110 may act as a service consumer and the NF 120 may act as a service producer. The SEPPs 170 and 180 can communicate with each other via one or more IP exchange Service (IPX) node(s) 190.

In Fig. 1A and/or 1B, the NRF is a network function which maintains NF profiles and available NF instances. The NRF can also provide service registration and discovery functionalities such that NFs can discover each other. In 5G SBA with Model D, the functionalities for discovering and selecting a target NF from a list of available NFs are delegated to the SCP. In this case, the NFc 110 and the NFp 120 may not directly connect to the NRFs 150 and 160. For example, the NFc 110 can discover the target NFp 120 by means of the SCPc 130. However, in 5G SBA with Model C, the SCP is not delegated for target NF discovery. In this case, the NFc 110 and the NFp 120 may be directly connected (or via respective SCPs) to the NRFs 150 and 160, respectively. In Fig. 1A and/or 1B, the SCPc 130 may be responsible for requesting an access token on behalf of the NFc 110 and routing the service request from the NFc 110 to the NFp 120. The NFp 120 may be responsible for validating the access token. It is to be understood that, in Fig. 1A and/or 1B, the SCPs 130 and 140 can be implemented as a same physical network entity or different physical network entities. The NRFs 150 and 160 can be implemented as a same physical network entity or different physical network entities, or can be coupled with each other.

It is to be understood that the network environments 100 and/or 102 are shown only for purpose of illustration, without suggesting any limitation to the scope of the present disclosure. Embodiments of the present disclosure may also be applied to an environment with a different structure.

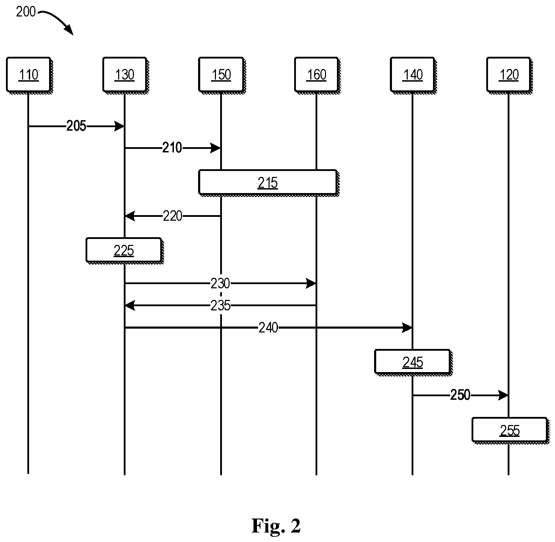

Fig. 2 illustrates an interaction diagram of an example process 200 for indirect communication according to some example embodiments of the present disclosure. In the following, the process 200 will be described with reference to Fig. 1B. For example, the process 200 may involve the NFc 110, the SCPc 130 and the SCPp 140, the NRFs 150 and 160, and the NFp 120 as shown in Fig. 1B. That is, the NFc 110, the SCPc 130 and the NRF 150 are in the PLMN 102-1, while the NFp 120, the SCPp 140 and the NRF 160 are in the PLMN 102-2. In the example as shown in Fig. 2, it is assumed that Model D for 5G SBA is applied. It is to be understood that this is merely for the purpose of discussion, without suggesting any limitation to the scope of the present disclosure. Embodiments of the present disclosure are also applicable to 5G SBA with Model C.

As shown in Fig. 2, the NFc 110 intends to request a service from a NFp and transmits 205 a service request to the SCPc 130 serving the NFc 110.

In some example embodiments, the NFc 110 may add a new HTTP header "3gpp-Sbi-Authorization-Scope" (or "3gpp-Sbi-Scope") in the service request, which indicates scope information about the requested service. In some example embodiments, the scope information may comprise first information indicating a service name of the requested service and/or second information indicating requested resources and requested actions (service operations) on the resources. For example, the requested actions may include but be not limited to, creating, modifying, reading a resource and so on. That is, the first information may indicate a scope of the service request and the second information may indicate an additional scope of the service request. The scope information indicated in the HTTP header can be used by the SCPc 130 to request an access token corresponding to the service request.

In some example embodiments, encoding of the header may follow the ABNF defined in IETF RFC 7230. For example, the header can be encoded as the following: 3gpp-Sbi-Authorization-Scope = "3gpp-Sbi-Authorization-Scope" ":"scope-token*(SP scope-token), where scope-token may consist of a NF service name and/or a resource/operation-level scope defined by each service API, separated by whitespaces. For example, regarding a service request corresponding to the following service operation:
/{impu }/authorize:
post:
summary: Authorize IMS Identities to register in the network or establish multimedia sessions and return CSCF location if it is stored
operationId: Authorize
tags:
   - Authorize Ims identities
security:
   - {}
   - oAuth2ClientCredentials:
      - nhss-ims-uecm
   - oAuth2ClientCredentials:
      - nhss-ims-uecm
      - nhss-ims-uecm:authorize:invoke
the HTTP header may be "3gpp-Sbi-Authorization-Scope:nhss-ims-uecm nhss-ims-uecm:authorize:invoke", where "authorize" indicates the service name of the requested service and "invoke" indicates a requested service operation.

In some example embodiments, the service request may include at least an identifier (ID) of the source PLMN 102-1 and an ID of the target PLMN 102-2 in the discovery and selection parameters necessary for the SCPc 130 to discover and select a NFp. The discovery and selection parameters may be included in the service request by the NFc 110 in such a way that the SCPc 130 does not need to parse the body of the service request.

In response to receiving the service request, the SCPc 130 may recognize that the service request is targeted to a NFp in a different PLMN and thus interact with the NRF 150 using the Nnrf_NFDiscovery service. As shown in Fig. 2, the SCPc 130 transmits 210 a Nnrf_NFDiscovery request to the NRF 150 in the PLMN 102-1. The NRF 150 in the PLMN 102-1 and the NRF 160 in the PLMN 102-2 interacts 215 with each other using the Nnrf_NFDiscovery service. The SCPc 130 receives 220 a Nnrf_NFDiscovery response with NF profiles from the NRF 150 and selects 225 a NFp (such as, the NFp 120) in the PLMN 102-2.

Then, the SCPc 130 interacts with the NRF 160 (for example, via the NRF 150) using the Nnrf_NFAccessToken service. As shown in Fig. 2, the SCPc 130 transmits 230, to the NRF 160 (for example, via the NRF 150), a request for an access token corresponding to the scope information indicated in the HTTP header. The SCPc 130 receives 235, from the NRF 160 (for example, via the NRF 150), a response comprising the access token.

In some example embodiments, the access token comprises scope information about an authorized service. In some example embodiments, the scope information comprised in the access token may include third information indicating a service name of the authorized service and/or fourth information indicating authorized resources and/or authorized actions (service operations) on the resources. That is, the third information may indicate a scope of the authorized service and the fourth information may indicate an additional scope of the authorized service.

As shown in Fig. 2, the SCPc 130 forwards 240 the service request including the HTTP header and the access token to the SCPp 140 in the PLMN 102-2. The SCPp 140 verifies 245 the access token based on the HTTP header of the service request.

In some example embodiments, the SCPp 140 may verify integrity of the access token. For example, the SCPp 140 may verify the signature of the access token using the configured public key or checking the MAC value using the shared secret. In response to the integrity of the access token being verified, the SCPp 140 may validate the service request by checking if the scope information indicated in the HTTP header matches the scope information indicated in the access token. The SCPp 140 may check whether the scope indicated in the HTTP header matches the scope indicated in the access token. The SCPp 140 may also check whether the additional scope indicated in the header matches the additional scope indicated in the access token, if they are present. If the scope indicated in the HTTP header does not match the scope indicated in the access token or the additional scope indicated in the header does not match the additional scope indicated in the access token, the SCPp 140 may determine that the validation of the access token fails. If the scope information indicated in the HTTP header matches the scope information indicated in the access token, the SCPp 140 may further perform other validation operations, such as, checking if the access token expires or not. As such, the verification of the access token can be offloaded from the NFp 120 to the SCPp 140.

As shown in Fig. 2, in response to the verification of the access token succeeding, the SCPp 140 removes the access token from the service request and forwards 250 the service request including the HTTP header to the NFp 120. In response to receiving the service request, the NFp 120 may verify 255 if the scope(s) of the received service request matches the scope information indicated in the HTTP header. For example, the NFp 120 may derive the scope and/or the additional scope of the received service request by parsing the HTTP method, the HTTP Uniform Resource Identifier (URI) or the body of the service request. Then, the NFp 120 may check if the derived scope(s) matches the scope(s) indicated in the HTTP header. As such, the NFp 120 no longer needs to validate the access token but only needs to verify that the service request matches the scope(s) indicated in the HTTP header.

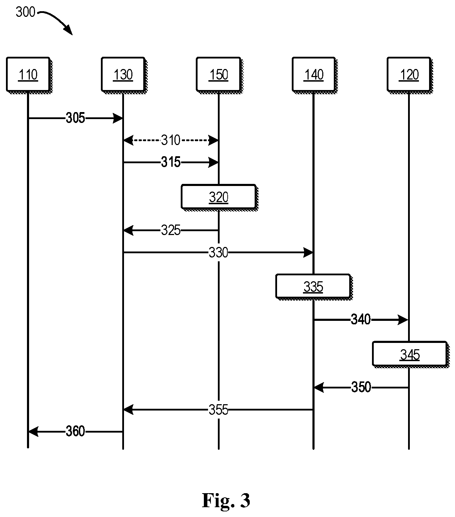

Fig. 3 illustrates an interaction diagram of an example process 300 for indirect communication according to some example embodiments of the present disclosure. In the following, the process 200 will be described with reference to Fig. 1A. For example, the process 300 may involve the NFc 110, the SCPc 130 and the SCPp 140, the NRFs 150 and 160, and the NFp 120 in the same PLMN as shown in Fig. 1A. For example, the NRFs 150 and 160 are implemented as a same network entity and thus the NRF 160 is omitted in Fig. 3. In the example as shown in Fig. 3, it is assumed that Model D for 5G SBA is applied. It is to be understood that this is merely for the purpose of discussion, without suggesting any limitation to the scope of the present disclosure. Embodiments of the present disclosure are also applicable to 5G SBA with Model C.

As shown in Fig. 3, the NFc 110 intends to request a service from a NFp 120 and transmits 305 a service request to the SCPc 130 serving the NFc 110. The service request may include Client Credentials Assertion (CCA) of the NFc 110 and a HTTP header indicating scope information about the requested service.

In some example embodiments, the NFc 110 may add a new HTTP header "3gpp-Sbi-Authorization-Scope" (or "3gpp-Sbi-Scope") in the service request, which indicates scope information about the requested service. In some example embodiments, the scope information may comprise first information indicating a service name of the requested service and/or second information indicating requested resources and requested actions (service operations) on the resources. For example, the requested actions may include but be not limited to, creating, modifying, reading a resource and so on. That is, the first information may indicate a scope of the service request and the second information may indicate an additional scope of the service request. The scope information indicated in the HTTP header can be used by the SCPc 130 to request an access token corresponding to the service request.

In some example embodiments, encoding of the header may follow the ABNF defined in IETF RFC 7230. For example, the header can be encoded as the following: 3gpp-Sbi-Authorization-Scope = "3gpp-Sbi-Authorization-Scope" ":"scope-token*(SP scope-token), where scope-token may consist of a NF service name and/or a resource/operation-level scope defined by each service API, separated by whitespaces.

As shown in Fig. 3, in response to receiving the service request, the SCPc 130 performs 310 a service discovery with the NRF 150. The SCPc 130 transmits 315, to the NRF 150, a request for an access token corresponding to the scope information indicated in the HTTP header. For example, the request may include the CCA of the NFc and the scope information. As shown by 320 in Fig. 3, the NRF 150 authenticates the NFc 110. If the authentication is successful and the NFc 110 is authorized based on the NRF policy, the NRF 150 issues an access token and uses the instance identifier of the NFc 110 as the subject of the access token. The SCPc 130 receives 325, from the NRF 150, a response comprising the access token.

In some example embodiments, the access token comprises scope information about an authorized service. In some example embodiments, the scope information comprised in the access token may include third information indicating a service name of the authorized service and/or fourth information indicating authorized resources and/or authorized actions (service operations) on the resources. That is, the third information may indicate a scope of the authorized service and the fourth information may indicate an additional scope of the authorized service.

As shown in Fig. 3, the SCPc 130 forwards 330 the service request including the HTTP header and the CCA of the NFc 110 as well as the access token to the SCPp 140. The SCPp 140 verifies 335 the access token based on the HTTP header of the service request.

In some example embodiments, the SCPp 140 may verify integrity of the access token. For example, the SCPp 140 may verify the signature of the access token using the configured public key or checking the MAC value using the shared secret. In response to the integrity of the access token being verified, the SCPp 140 may validate the service request by checking if the scope information indicated in the HTTP header matches the scope information indicated in the access token. The SCPp 140 may check whether the scope indicated in the HTTP header matches the scope indicated in the access token. The SCPp 140 may also check whether the additional scope indicated in the header matches the additional scope indicated in the access token, if they are present. If the scope indicated in the HTTP header does not match the scope indicated in the access token or the additional scope indicated in the header does not match the additional scope indicated in the access token, the SCPp 140 may determine that the validation of the access token fails. If the scope information indicated in the HTTP header matches the scope information indicated in the access token, the SCPp 140 may further perform other validation operations, such as, checking if the access token expires or not. As such, the verification of the access token can be offloaded from the NFp 120 to the SCPp 140.

As shown in Fig. 3, in response to the verification of the access token succeeding, the SCPp 140 removes the access token from the service request and forwards 340 the service request including the HTTP header to the NFp 120. In response to receiving the service request, the NFp 120 may verify 345 if the scope(s) of the received service request matches the scope information indicated in the HTTP header. For example, the NFp 120 may derive the scope and/or the additional scope of the received service request by parsing the HTTP method, HTTP URI or body of the service request. Then, the NFp 120 may check if the derived scope(s) matches the scope(s) indicated in the HTTP header. As such, the NFp 120 no longer needs to validate the access token but only needs to verify that the service request matches the scope(s) indicated in the HTTP header.

As shown in Fig. 3, if the verification of the scope information is successful, the NFp 120 provides the requested service to the NFc 110 and transmits 350 a service response to the SCPp 140. The SCPp 140 forwards 355 the service response to the SCPc 130 and the SCPc 130 forwards 360 the service response to the NFc 110.

It can be seen that embodiments of the present disclosure provide a solution for handling access tokens in an indirect communication scenario. According to this solution, a NFc includes in its service request a header indicating scope information corresponding to the service request and transmits the service request the SCPc. This allows the SCPc to request an access token corresponding to the scope information indicated in the header. Moreover, the verification of the access token is offloaded from the NFp to the SCPp.

In this way, the SCP(s) can remain application/API logic agnostic. The mapping between the service request and the scope(s) indicated in the header is generated by the NFc and verified by the NFp. As such, the requesting and validation of the access token can happen at the SCPc and SCPp respectively, while the SCPs do not have to understand the application/API logic of the NFc or NFp. The overhead on the NFp can be significantly reduced.

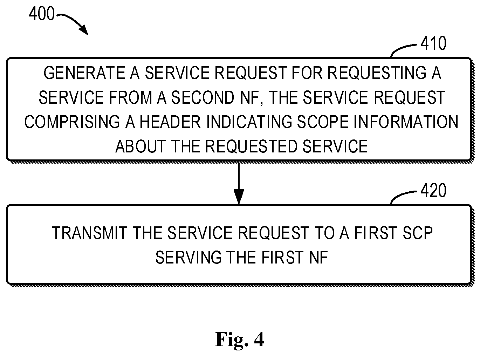

Fig. 4 shows a flowchart of an example method 400 according to some example embodiments of the present disclosure. The method 400 can be implemented at the first NF 110 as shown in Fig. 1. It is to be understood that the method 400 may include additional blocks not shown and/or may omit some shown blocks, and the scope of the present disclosure is not limited in this regard.

At block 410, the first NF generates a service request for requesting a service from a second NF (for example, the NFp 120 as shown in Fig. 1), the service request comprising a header indicating scope information about the requested service.

At block 420, the first NF transmits the service request to a first SCP (for example, the SCPc 130 as shown in Fig. 1) serving the first NF.

In some example embodiments, the scope information comprises at least one of the following: first information indicating a service name of the requested service; and second information indicating requested resources for the requested service and requested actions on the resources.

In some example embodiments, the method 400 further comprises: determining the second NF prior to generating the service request.

In some example embodiments, the service request further comprises at least one parameter for determining the second NF by the first SCP.

In some example embodiments, the method 400 further comprises: receiving, from the first SCP, a service response to the service request.

In some example embodiments, the first NF and the first SCP are in a first PLMN, and the second NF is in the first PLMN.

In some example embodiments, the first NF and the first SCP are in a first PLMN, and the second NF is in a second PLMN different from the first PLMN.

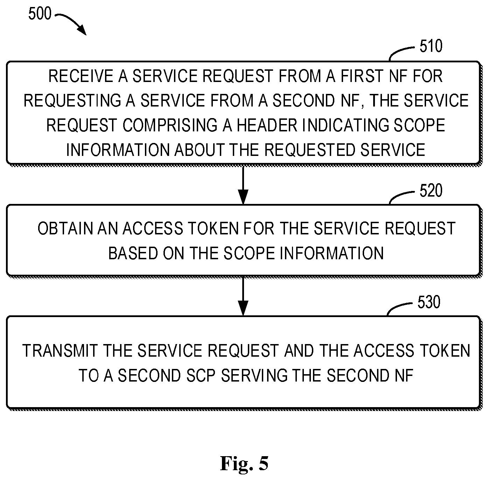

Fig. 5 shows a flowchart of an example method 500 according to some example embodiments of the present disclosure. The method 500 can be implemented at the first SCP 130 as shown in Fig. 1. It is to be understood that the method 500 may include additional blocks not shown and/or may omit some shown blocks, and the scope of the present disclosure is not limited in this regard.

At block 510, the first SCP receives a service request from a first NF (for example, the NFc 110 as shown in Fig. 1) for requesting a service from a second NF (for example, the NFp 120 as shown in Fig. 1), the service request comprising a header indicating scope information about the requested service.

At block 520, the first SCP obtains an access token for the service request based on the scope information.

At block 530, the first SCP transmits the service request and the access token to a second SCP (for example, the SCPp 140 as shown in Fig. 1) serving the second NF.

In some example embodiments, the scope information comprises at least one of the following: first information indicating a service name of the requested service; and second information indicating requested resources for the requested service and requested actions on the resources.

In some example embodiments, the service request further comprises at least one parameter for determining the second network function by the first service communication proxy, and the method 500 further comprises: in response to receiving the service request, determining the second NF based on the at least one parameter.

In some example embodiments, obtaining the access token comprises: transmitting a request for the access token to a network function repository function, the request comprising the scope information; and receiving a response to the request from the network function repository function, the response comprising the access token.

In some example embodiments, the method 500 further comprises: in response to receiving a service response to the service request from the second SCP, forwarding the service response to the first NF.

In some example embodiments, the first NF and the first SCP are in a first PLMN, and the second NF and the second SCP are in the first PLMN.

In some example embodiments, the first NF and the first SCP are in a first PLMN, and the second NF and the second SCP are in a second PLMN different from the first PLMN.

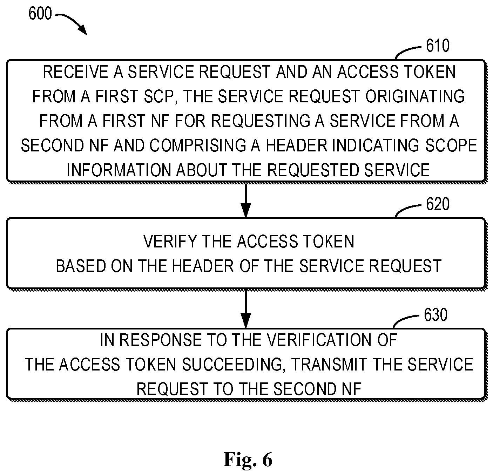

Fig. 6 shows a flowchart of an example method 600 according to some example embodiments of the present disclosure. The method 600 can be implemented at the second SCP 140 as shown in Fig. 1. It is to be understood that the method 600 may include additional blocks not shown and/or may omit some shown blocks, and the scope of the present disclosure is not limited in this regard.

At block 610, the second SCP receives a service request and an access token from a first SCP (for example, the SCPc 130 as shown in Fig. 1), the service request originating from a first NF (for example, the NFc 110 as shown in Fig. 1) for requesting a service from a second NF (for example, the NFp 120 as shown in Fig. 1) and comprising a header indicating scope information about the requested service.

At block 620, the second SCP verifies the access token based on the header of the service request.

At block 630, in response to the verification of the access token succeeding, the second SCP transmits the service request to the second NF without transmitting the access token to the second NF.

In some example embodiments, verifying the access token comprises: verifying integrity of the access token; and in response to the integrity of the access token being verified, validating the access token by checking if the scope information about the requested service matches scope information about an authorized service comprised in the access token.

In some example embodiments, the scope information about the requested service comprises first information indicating a service name of the requested service and the scope information about the authorized service comprises third information indicating a service name of the authorized service. Validating the access token comprises: determining whether the first information matches the third information; and in accordance with the determination that the first information does not match the third information, determining that the validation of the access token fails.

In some example embodiments, the scope information about the requested service comprises second information indicating requested resources for the requested service and requested actions on the requested resources and the scope information about the authorized service comprises fourth information indicating authorized resources for the authorized service and authorized actions on the authorized resources. Validating the access token comprises: determining whether the second information matches the fourth information; and in accordance with the determination that the second information does not match the fourth information, determining that the validation of the access token fails.

In some example embodiments, the method 600 further comprises: in response to receiving a service response to the service request from the second NF, forwarding the service response to the first SCP.

In some example embodiments, the first NF and the first SCP are in a first PLMN, and the second NF and the second SCP are in the first PLMN.

In some example embodiments, the first NF and the first SCP are in a first PLMN, and the second NF and the second SCP are in a second PLMN different from the first PLMN.

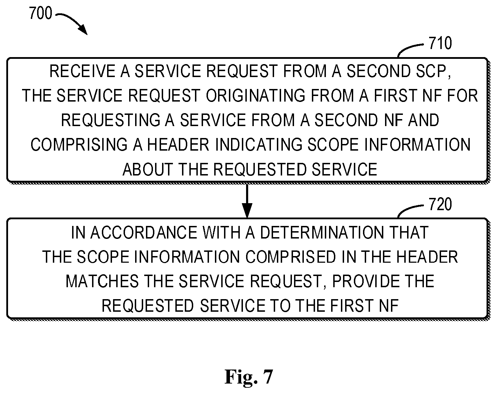

Fig. 7 shows a flowchart of an example method 700 according to some example embodiments of the present disclosure. The method 700 can be implemented at the second NF 120 as shown in Fig. 1. It is to be understood that the method 700 may include additional blocks not shown and/or may omit some shown blocks, and the scope of the present disclosure is not limited in this regard.

At block 710, the second NF receives a service request from a second SCP (for example, the SCPp 140 as shown in Fig. 1), the service request originating from a first NF (for example, the NFc 110 as shown in Fig. 1) for requesting a service from a second NF (for example, the NFp 120 as shown in Fig. 1) and comprising a header indicating scope information about the requested service.

At block 720, in accordance with a determination that the scope information comprised in the header matches the service request, the second NF provides the requested service to the first NF.

In some example embodiments, the scope information comprises at least one of the following: first information indicating a service name of the requested service; and second information indicating requested resources for the requested service and requested actions on the resources.

In some example embodiments, the method 700 further comprises: transmitting, to the second SCP, a service response to the service request.

In some example embodiments, the first NF is in a first PLMN, and the second NF and the second SCP are in the first PLMN.

In some example embodiments, the first NF is in a first PLMN, and the second NF and the second SCP are in a second PLMN different from the first PLMN.

In some example embodiments, an apparatus capable of performing the method 400 may comprise means for performing the respective steps of the method 400. The means may be implemented in any suitable form. For example, the means may be implemented in a circuitry or software module.

In some example embodiments, the apparatus capable of performing the method 400 comprises: means for generating, at a first NF, a service request for requesting a service from a second NF, the service request comprising a header indicating scope information about the requested service; and means for transmitting the service request to a first SCP serving the first NF.

In some example embodiments, the scope information comprises at least one of the following: first information indicating a service name of the requested service; and second information indicating requested resources for the requested service and requested actions on the resources.

In some example embodiments, the apparatus capable of performing the method 400 further comprises: means for determining the second NF prior to generating the service request.

In some example embodiments, the service request further comprises at least one parameter for determining the second NF by the first SCP.

In some example embodiments, the apparatus capable of performing the method 400 further comprises: means for receiving, from the first SCP, a service response to the service request.

In some example embodiments, the first NF and the first SCP are in a first PLMN, and the second NF is in the first PLMN.

In some example embodiments, the first NF and the first SCP are in a first PLMN, and the second NF is in a second PLMN different from the first PLMN.

In some example embodiments, an apparatus capable of performing the method 500 may comprise means for performing the respective steps of the method 500. The means may be implemented in any suitable form. For example, the means may be implemented in a circuitry or software module.

In some example embodiments, the apparatus capable of performing the method 500 comprises: means for receiving, at a first SCP, a service request from a first NF for requesting a service from a second NF, the service request comprising a header indicating scope information about the requested service; means for obtaining an access token for the service request based on the scope information; and means for transmitting the service request and the access token to a second SCP serving the second NF.

In some example embodiments, the scope information comprises at least one of the following: first information indicating a service name of the requested service; and second information indicating requested resources for the requested service and requested actions on the resources.

In some example embodiments, the service request further comprises at least one parameter for determining the second network function by the first service communication proxy, and the apparatus capable of performing the method 500 further comprises: means for in response to receiving the service request, determining the second NF based on the at least one parameter.

In some example embodiments, the means for obtaining the access token comprises: means for transmitting a request for the access token to a network function repository function, the request comprising the scope information; and means for receiving a response to the request from the network function repository function, the response comprising the access token.

In some example embodiments, the apparatus capable of performing the method 500 further comprises: means for in response to receiving a service response to the service request from the second SCP, forwarding the service response to the first NF.

In some example embodiments, the first NF and the first SCP are in a first PLMN, and the second NF and the second SCP are in the first PLMN.

In some example embodiments, the first NF and the first SCP are in a first PLMN, and the second NF and the second SCP are in a second PLMN different from the first PLMN.

In some example embodiments, an apparatus capable of performing the method 600 may comprise means for performing the respective steps of the method 600. The means may be implemented in any suitable form. For example, the means may be implemented in a circuitry or software module.

In some example embodiments, the apparatus capable of performing the method 600 comprises: means for receiving, at a second SCP, a service request and an access token from a first SCP, the service request originating from a first NF for requesting a service from a second NF and comprising a header indicating scope information about the requested service; means for verifying the access token based on the header of the service request; and means for in response to the verification of the access token succeeding, transmitting the service request to the second NF without transmitting the access token to the second network function.

In some example embodiments, the means for verifying the access token comprises: means for verifying integrity of the access token; and means for in response to the integrity of the access token being verified, validating the access token by checking if the scope information about the requested service matches scope information about an authorized service comprised in the access token.

In some example embodiments, the scope information about the requested service comprises first information indicating a service name of the requested service and the scope information about the authorized service comprises third information indicating a service name of the authorized service. The means for validating the access token comprises: means for determining whether the first information matches the third information; and means for in accordance with the determination that the first information does not match the third information, determining that the validation of the access token fails.

In some example embodiments, the scope information about the requested service comprises second information indicating requested resources for the requested service and requested actions on the requested resources and the scope information about the authorized service comprises fourth information indicating authorized resources for the authorized service and authorized actions on the authorized resources. The means for validating the access token comprises: means for determining whether the second information matches the fourth information; and means for in accordance with the determination that the second information does not match the fourth information, determining that the validation of the access token fails.

In some example embodiments, the apparatus capable of performing the method 600 further comprises: means for in response to receiving a service response to the service request from the second NF, forwarding the service response to the first SCP.

In some example embodiments, the first NF and the first SCP are in a first PLMN, and the second NF and the second SCP are in the first PLMN.

In some example embodiments, the first NF and the first SCP are in a first PLMN, and the second NF and the second SCP are in a second PLMN different from the first PLMN.

In some example embodiments, an apparatus capable of performing the method 700 may comprise means for performing the respective steps of the method 700. The means may be implemented in any suitable form. For example, the means may be implemented in a circuitry or software module.

In some example embodiments, the apparatus capable of performing the method 700 comprises: means for receiving, at a second NF, a service request from a second SCP, the service request originating from a first NF for requesting a service from a second NF and comprising a header indicating scope information about the requested service; and means for in accordance with a determination that the scope information comprised in the header matches the service request, providing the requested service to the first NF.

In some example embodiments, the scope information comprises at least one of the following: first information indicating a service name of the requested service; and second information indicating requested resources for the requested service and requested actions on the resources.

In some example embodiments, the apparatus capable of performing the method 700 further comprises: means for transmitting, to the second SCP, a service response to the service request.

In some example embodiments, the first NF is in a first PLMN, and the second NF and the second SCP are in the first PLMN.

In some example embodiments, the first NF is in a first PLMN, and the second NF and the second SCP are in a second PLMN different from the first PLMN.

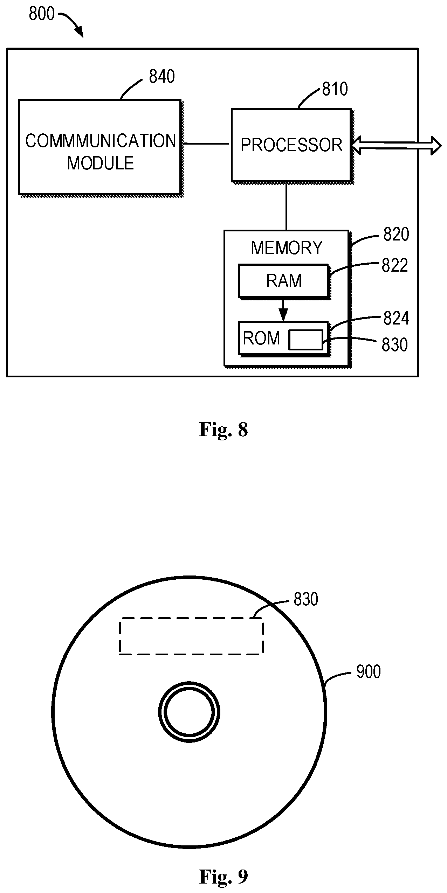

Fig. 8 is a simplified block diagram of a device 800 that is suitable for implementing embodiments of the present disclosure. For example, the NFc 110, the NFp 120, the SCPc 130 and/or the SCPp 140 can be implemented by the device 800. As shown, the device 800 includes one or more processors 810, one or more memories 820 coupled to the processor 810, and one or more communication modules 840 coupled to the processor 810.

The communication module 840 is for bidirectional communications. The communication module 840 has at least one antenna to facilitate communication. The communication interface may represent any interface that is necessary for communication with other network elements.

The processor 810 may be of any type suitable to the local technical network and may include one or more of the following: general purpose computers, special purpose computers, microprocessors, digital signal processors (DSPs) and processors based on multicore processor architecture, as non-limiting examples. The device 800 may have multiple processors, such as an application specific integrated circuit chip that is slaved in time to a clock which synchronizes the main processor.

The memory 820 may include one or more non-volatile memories and one or more volatile memories. Examples of the non-volatile memories include, but are not limited to, a Read Only Memory (ROM) 824, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 822 and other volatile memories that will not last in the power-down duration.

A computer program 830 includes computer executable instructions that are executed by the associated processor 810. The program 830 may be stored in the ROM 824. The processor 810 may perform any suitable actions and processing by loading the program 830 into the RAM 822.

The embodiments of the present disclosure may be implemented by means of the program 830 so that the device 800 may perform any process of the disclosure as discussed with reference to Figs. 2-7. The embodiments of the present disclosure may also be implemented by hardware or by a combination of software and hardware.

In some example embodiments, the program 830 may be tangibly contained in a computer readable medium which may be included in the device 800 (such as in the memory 820) or other storage devices that are accessible by the device 800. The device 800 may load the program 830 from the computer readable medium to the RAM 822 for execution. The computer readable medium may include any types of tangible non-volatile storage, such as ROM, EPROM, a flash memory, a hard disk, CD, DVD, and the like. Fig. 9 shows an example of the computer readable medium 900 in form of CD or DVD. The computer readable medium has the program 830 stored thereon.

It should be appreciated that future networks may utilize network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications, this may mean node operations to be carried out, at least partly, in a central/centralized unit, CU, (e.g. server, host or node) operationally coupled to distributed unit, DU, (e.g. a radio head/node). It is also possible that node operations will be distributed among a plurality of servers, nodes or hosts. It should also be understood that the distribution of labour between core network operations and base station operations may vary depending on implementation.

In an embodiment, the server may generate a virtual network through which the server communicates with the distributed unit. In general, virtual networking may involve a process of combining hardware and software network resources and network functionality into a single, software-based administrative entity, a virtual network. Such virtual network may provide flexible distribution of operations between the server and the radio head/node. In practice, any digital signal processing task may be performed in either the CU or the DU and the boundary where the responsibility is shifted between the CU and the DU may be selected according to implementation.

Therefore, in an embodiment, a CU-DU architecture is implemented. In such case the apparatus 800 may be comprised in a central unit (e.g. a control unit, an edge cloud server, a server) operatively coupled (e.g. via a wireless or wired network) to a distributed unit (e.g. a remote radio head/node). That is, the central unit (e.g. an edge cloud server) and the distributed unit may be stand-alone apparatuses communicating with each other via a radio path or via a wired connection. Alternatively, they may be in a same entity communicating via a wired connection, etc. The edge cloud or edge cloud server may serve a plurality of distributed units or a radio access networks. In an embodiment, at least some of the described processes may be performed by the central unit. In another embodiment, the apparatus 800 may be instead comprised in the distributed unit, and at least some of the described processes may be performed by the distributed unit.

In an embodiment, the execution of at least some of the functionalities of the apparatus 800 may be shared between two physically separate devices (DU and CU) forming one operational entity. Therefore, the apparatus may be seen to depict the operational entity comprising one or more physically separate devices for executing at least some of the described processes. In an embodiment, such CU-DU architecture may provide flexible distribution of operations between the CU and the DU. In practice, any digital signal processing task may be performed in either the CU or the DU and the boundary where the responsibility is shifted between the CU and the DU may be selected according to implementation. In an embodiment, the apparatus 800 controls the execution of the processes, regardless of the location of the apparatus and regardless of where the processes/functions are carried out.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the methods 400, 500, 600 and/or 700 as described above with reference to Figs. 4-7. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. An apparatus comprising:
at least one processor; and
at least one memory including computer program codes;
the at least one memory and the computer program codes are configured to, when executed by the at least one processor, cause the apparatus to:
generate (410), at a first network function acting as a service consumer, a service request for requesting a service from a second network function acting as a service provider, the service request comprising a header indicating scope information about the requested service; and
transmit (420) the service request to a first service communication proxy serving the first network function,
wherein the scope information comprises information indicating requested resources for the requested service and requested actions on the resources.

2. The apparatus of claim 1, wherein the apparatus is further caused to:
determine the second network function prior to generating the service request.

3. The apparatus of claim 1, wherein the service request further comprises at least one parameter for determining the second network function by the first service communication proxy.

4. The apparatus of claim 1, wherein the apparatus is further caused to:
receive, from the first service communication proxy, a service response to the service request.

5. The apparatus of claim 1, wherein:
the first network function and the first service communication proxy are in a first Public Land Mobile Network, and the second network function is in the first Public Land Mobile Network; or
the first network function and the first service communication proxy are in a first Public Land Mobile Network, and the second network function is in a second Public Land Mobile Network different from the first Public Land Mobile Network.

6. An apparatus comprising:
at least one processor; and
at least one memory including computer program codes;
the at least one memory and the computer program codes are configured to, when executed by the at least one processor, cause the apparatus to:
receive (510), at a first service communication proxy, a service request from a first network function acting as a service consumer for requesting a service from a second network function acting as a service provider, the service request comprising a header indicating scope information about the requested service;
obtain (520) an access token for the service request based on the scope information; and
transmit (530) the service request and the access token to a second service communication proxy serving the second network function,
wherein the scope information comprises information indicating requested resources for the requested service and requested actions on the resources.

7. The apparatus of claim 6, wherein the service request further comprises at least one parameter for determining the second network function by the first service communication proxy, and the apparatus is further caused to:
in response to receiving the service request, determine the second network function based on the at least one parameter.

8. The apparatus of claim 6, wherein the apparatus is further caused to:
transmit a request for the access token to a network function repository function, the request comprising the scope information; and
receive a response to the request from the network function repository function, the response comprising the access token.

9. The apparatus of claim 6, wherein the apparatus is further caused to:
in response to receiving a service response to the service request from the second service communication proxy, forward the service response to the first network function.

10. The apparatus of claim 6, wherein:
the first network function and the first service communication proxy are in a first Public Land Mobile Network, and the second network function and the second service communication proxy are in the first Public Land Mobile Network; or
the first network function and the first service communication proxy are in a first Public Land Mobile Network, and the second network function and the second service communication proxy are in a second Public Land Mobile Network different from the first Public Land Mobile Network.

## Patentansprüche

1. Einrichtung, die Folgendes umfasst:
mindestens einen Prozessor; und
mindestens einen Speicher, der Computerprogrammcodes beinhaltet;
der mindestens eine Speicher und die Computerprogrammcodes, wenn sie von dem mindestens einen Prozessor ausgeführt werden, sind dazu ausgelegt, die Einrichtung zu Folgendem zu veranlassen:
Erzeugen (410) einer Dienstanforderung zum Anfordern eines Dienstes von einer zweiten Netzwerkfunktion, die als ein Dienstanbieter fungiert, an einer ersten Netzwerkfunktion, die als ein Dienstverbraucher fungiert, wobei die Dienstanforderung einen Header umfasst, der Umfangsinformationen über den angeforderten Dienst anzeigt; und
Übertragen (420) der Dienstanforderung zu einem ersten Dienstkommunikationsproxy, der die erste Netzwerkfunktion bedient,
wobei die Umfangsinformationen Informationen umfassen, die angeforderte Ressourcen für den angeforderten Dienst und angeforderte Aktionen auf den Ressourcen anzeigen.

2. Einrichtung nach Anspruch 1, wobei die Einrichtung ferner zu Folgendem veranlasst wird:
Bestimmen der zweiten Netzwerkfunktion vor dem Erzeugen der Dienstanforderung.

3. Einrichtung nach Anspruch 1, wobei die Dienstanforderung ferner mindestens einen Parameter zum Bestimmen der zweiten Netzwerkfunktion durch den ersten Dienstkommunikationsproxy umfasst.

4. Einrichtung nach Anspruch 1, wobei die Einrichtung ferner zu Folgendem veranlasst wird:
Empfangen einer Dienstantwort auf die Dienstanforderung vom ersten Dienstkommunikationsproxy.

5. Einrichtung nach Anspruch 1, wobei:
die erste Netzwerkfunktion und der erste Dienstkommunikationsproxy sich in einem ersten öffentlichen terrestrischen Mobilfunknetzwerk befinden und die zweite Netzwerkfunktion sich im ersten öffentlichen terrestrischen Mobilfunknetzwerk befindet; oder
die erste Netzwerkfunktion und der erste Dienstkommunikationsproxy sich in einem ersten öffentlichen terrestrischen Mobilfunknetzwerk befinden und die zweite Netzwerkfunktion sich in einem zweiten öffentlichen terrestrischen Mobilfunknetzwerk befindet, das sich vom ersten öffentlichen terrestrischen Mobilfunknetzwerk unterscheidet.

6. Einrichtung, die Folgendes umfasst:
mindestens einen Prozessor; und
mindestens einen Speicher, der Computerprogrammcodes beinhaltet;
der mindestens eine Speicher und die Computerprogrammcodes, wenn sie von dem mindestens einen Prozessor ausgeführt werden, sind dazu ausgelegt, die Einrichtung zu Folgendem zu veranlassen:
Empfangen (510) einer Dienstanforderung an einem ersten Dienstkommunikationsproxy von einer ersten Netzwerkfunktion, die als ein Dienstverbraucher fungiert, zum Anfordern eines Dienstes von einer zweiten Netzwerkfunktion, die als ein Dienstanbieter fungiert, wobei die Dienstanforderung einen Header umfasst, der Umfangsinformationen über den angeforderten Dienst anzeigt;
Erhalten (520) eines Zugangstokens für die Dienstanforderung auf Basis der Umfangsinformationen; und
Übertragen (530) der Dienstanforderung und des Zugangstokens zu einem zweiten Dienstkommunikationsproxy, der die zweite Netzwerkfunktion bedient,
wobei die Umfangsinformationen Informationen umfassen, die angeforderte Ressourcen für den angeforderten Dienst und angeforderte Aktionen auf den Ressourcen anzeigen.

7. Einrichtung nach Anspruch 6, wobei die Dienstanforderung ferner mindestens einen Parameter zum Bestimmen der zweiten Netzwerkfunktion durch den ersten Dienstkommunikationsproxy umfasst und die Einrichtung ferner zu Folgendem veranlasst wird:
in Reaktion auf das Empfangen der Dienstanforderung Bestimmen der zweiten Netzwerkfunktion auf Basis des mindestens einen Parameters.

8. Einrichtung nach Anspruch 6, wobei die Einrichtung ferner zu Folgendem veranlasst wird:
Übertragen einer Anforderung des Zugangstokens zu einer Netzwerkfunktionsrepositoriumsfunktion, wobei die Anforderung die Umfangsinformationen umfasst; und
Empfangen einer Antwort auf die Anforderung von der Netzwerkfunktionsrepositoriumsfunktion, wobei die Antwort das Zugangstoken umfasst.

9. Einrichtung nach Anspruch 6, wobei die Einrichtung ferner zu Folgendem veranlasst wird:
in Reaktion auf das Empfangen der Dienstantwort auf die Dienstanforderung vom zweiten Dienstkommunikationsproxy Weiterleiten der Dienstantwort zur ersten Netzwerkfunktion.

10. Einrichtung nach Anspruch 6, wobei:
die erste Netzwerkfunktion und der erste Dienstkommunikationsproxy sich in einem ersten öffentlichen terrestrischen Mobilfunknetzwerk befinden und die zweite Netzwerkfunktion und der zweite Dienstkommunikationsproxy sich im ersten öffentlichen terrestrischen Mobilfunknetzwerk befinden; oder
die erste Netzwerkfunktion und der erste Dienstkommunikationsproxy sich in einem ersten öffentlichen terrestrischen Mobilfunknetzwerk befinden und die zweite Netzwerkfunktion und der zweite Dienstkommunikationsproxy sich in einem zweiten öffentlichen terrestrischen Mobilfunknetzwerk befinden, das sich vom ersten öffentlichen terrestrischen Mobilfunknetzwerk unterscheidet.

## Revendications

1. Appareil comprenant :
au moins un processeur ; et
au moins une mémoire comportant des codes de programme informatique ;
l'au moins une mémoire et les codes de programme informatique sont configurés pour, lorsqu'ils sont exécutés par l'au moins un processeur, amener l'appareil à :
au niveau d'une première fonction réseau agissant en tant que consommateur de service, générer (410) une demande de service pour demander un service à une deuxième fonction réseau agissant en tant que fournisseur de service, la demande de service comprenant un en-tête indiquant des informations de portée concernant le service demandé ; et
transmettre (420) la demande de service à un premier mandataire de communication de service desservant la première fonction réseau,
dans lequel les informations de portée comprennent des informations indiquant des ressources demandées pour le service demandé et des actions demandées sur les ressources.

2. Appareil selon la revendication 1, dans lequel l'appareil est en outre amené à :
déterminer la deuxième fonction réseau avant de générer la demande de service.

3. Appareil selon la revendication 1, dans lequel la demande de service comprend en outre au moins un paramètre pour déterminer la deuxième fonction réseau par le premier mandataire de communication de service.

4. Appareil selon la revendication 1, dans lequel l'appareil est en outre amené à :
recevoir du premier mandataire de communication de service une réponse de service à la demande de service.

5. Appareil selon la revendication 1, dans lequel :
la première fonction réseau et le premier mandataire de communication de service se trouvent dans un premier réseau mobile terrestre public, et la deuxième fonction réseau se trouve dans le premier réseau mobile terrestre public ; ou
la première fonction réseau et le premier mandataire de communication de service se trouvent dans un premier réseau mobile terrestre public, et la deuxième fonction réseau se trouve dans un deuxième réseau mobile terrestre public différent du premier réseau mobile terrestre public.

6. Appareil comprenant :
au moins un processeur ; et
au moins une mémoire comportant des codes de programme informatique ;
l'au moins une mémoire et les codes de programme informatique sont configurés pour, lorsqu'ils sont exécutés par l'au moins un processeur, amener l'appareil à :
au niveau d'un premier mandataire de communication de service, recevoir (510) une demande de service d'une première fonction réseau agissant en tant que consommateur de service pour demander un service à une deuxième fonction réseau agissant en tant que fournisseur de service, la demande de service comprenant un en-tête indiquant des informations de portée concernant le service demandé ;
obtenir (520) un jeton d'accès pour la demande de service sur la base des informations de portée ; et
transmettre (530) la demande de service et le jeton d'accès à un deuxième mandataire de communication de service desservant la deuxième fonction réseau,
dans lequel les informations de portée comprennent des informations indiquant des ressources demandées pour le service demandé et des actions demandées sur les ressources.

7. Appareil selon la revendication 6, dans lequel la demande de service comprend en outre au moins un paramètre pour déterminer la deuxième fonction réseau par le premier mandataire de communication de service, et l'appareil est en outre amené à :
en réponse à la réception de la demande de service, déterminer la deuxième fonction réseau sur la base de l'au moins un paramètre.

8. Appareil selon la revendication 6, dans lequel l'appareil est en outre amené à :
transmettre une demande du jeton d'accès à une fonction de référentiel de fonction réseau, la demande comprenant les informations de portée ; et
recevoir une réponse à la demande de la fonction de référentiel de fonction réseau, la réponse comprenant le jeton d'accès.

9. Appareil selon la revendication 6, dans lequel l'appareil est en outre amené à :
en réponse à la réception d'une réponse de service à la demande de service du deuxième mandataire de communication de service, transférer la réponse de service à la première fonction réseau.

10. Appareil selon la revendication 6, dans lequel :
la première fonction réseau et le premier mandataire de communication de service se trouvent dans un premier réseau mobile terrestre public, et la deuxième fonction réseau et la deuxième mandataire de communication de service se trouvent dans le premier réseau mobile terrestre public ; ou
la première fonction réseau et le premier mandataire de communication de service se trouvent dans un premier réseau mobile terrestre public, et la deuxième fonction réseau et la deuxième mandataire de communication de service se trouvent dans un deuxième réseau mobile terrestre public différent du premier réseau mobile terrestre public.
